# EUROPÄISCHE PATENTSCHRIFT

(11) **EP 4 356 018 B1**
(45) Veröffentlichungstag und Bekanntmachung des Hinweises auf die Patenterteilung: **22.10.2025**
(21) Anmeldenummer: 22732538.8
(22) Anmeldetag: 10.06.2022
(51) Int. Cl.: F16D 51/14, F16D 65/22, F16D 65/52, B60T 1/06

(54) **TROMMELBREMSE**
DRUM BRAKE
FREIN À TAMBOUR

(30) Priorität: 18.06.2021 DE 102021115785
(43) Veröffentlichungstag der Anmeldung: 24.04.2024
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(86) Internationale Anmeldenummer: PCT/EP2022/065867
(87) Internationale Veröffentlichungsnummer: WO 2022/263324

(56) Entgegenhaltungen:
- EP-A2- 1 873 418
- DE-A1- 10 260 599
- DE-A1- 102010 003 250
- DE-A1- 102015 203 440
- US-A1- 2011 233 010

## Beschreibung

Die vorliegende Erfindung betrifft eine Trommelbremse, insbesondere für ein Nutzfahrzeug, gemäß dem Oberbegriff des Anspruchs 1.

Gattungsgemäße Trommelbremsen weisen einen zylindertrommelförmigen Rotor auf, mit an der Innenseite des auch als Bremstrommel bezeichneten Rotors angeordneten Reibflächen. Eine Bremskraft wird dabei mit Bremsbacken generiert, die gegen die innenliegende Reibfläche der Bremstrommel gedrückt werden.

Als einfachste und derzeit häufig verwendete Ausführung einer Trommelbremse ist die sogenannte Simplex-Trommelbremse zu benennen. Bei dieser werden zwei Bremsbacken durch eine einseitig an den Bremsbacken wirkende Zuspannvorrichtung hydraulisch oder mechanisch an die Trommel gedrückt, beispielsweise mithilfe eines Nockens, eines Spreizschlosses, Spreizkeils oder Spreizhebels.

Die beiden Bremsbacken sind dabei an gegenüberliegenden Seiten der Zuspannvorrichtung drehbar gelagert. Aufgrund der geometrischen Anordnung ergeben sich an den beiden gegenüberliegend angeordneten Bremsbacken von der Drehrichtung der Bremstrommel abhängige unterschiedliche Kräfte.

Während bei der sogenannten auflaufenden Bremsbacke, deren Lagerung in Drehrichtung der Bremstrommel hinter einem Reibbelag der Bremsbacke liegt, die Anpresskraft durch die Hebelwirkung, welche sich durch die Position des Bremsbackenlagers ergibt, verstärkt wird, ergibt sich an der sogenannten ablaufenden Bremsbacke ein umgekehrter Effekt.

Dementsprechend wird bei dieser Trommelbremse ein überwiegender Teil der Bremsarbeit von der auflaufenden Bremsbacke geleistet.

Dadurch ergibt sich eine ungleichmäßige Verteilung der Anpresskraft sowie der thermischen Belastung an den beiden Bremsbacken, was zur Folge hat, dass der Verschleiß des Reibbelags der beiden Bremsbacken unterschiedlich groß ist.

Ein Nachteil der Selbstverstärkung liegt auch darin, dass der sogenannte Bremsenkennwert (C*-Wert) überproportional mit dem Reibwert des Reibbelags ansteigt. Dadurch bedingt können deutlich unterschiedliche Bremskräfte an den Rädern und Achsen des abzubremsenden Fahrzeugs auftreten.

Solche Trommelbremsen haben auf der anderen Seite den Vorteil, dass die Bremsbacken nicht direkt der Umgebung ausgesetzt sind und somit dem Einfluss von Schmutz, Spritzwasser und Streusalz auf die Wirkung und den Zustand der Bremsbacken erheblich geringer ist als beispielsweise bei Scheibenbremsen.

Daher sind Trommelbremsen beispielsweise für den Einsatz im Gelände besser geeignet als Scheibenbremsen.

Ein weiterer Vorteil von Trommelbremsen besteht darin, dass bei Trommelbremsen praktisch kein Restschleifmoment auftritt, da bei dieser Bremsenbauart die Bremsbacken prinzipbedingt mit Bremsbackenrückstellfedern aktiv in eine Nichtbremsstellung zurückgezogen werden und damit ein Schleifen der Bremsbacken, wie es bei Bremsbacken von Scheibenbremsen vorkommt, ausgeschlossen werden kann.

Ein weiterer Vorteil von Trommelbremsen besteht darin, den Abrieb des Reibbelags sammeln zu können und damit die Umgebung bzw. Umwelt von solchem Bremsstaub zu entlasten und darüber hinaus den irreversiblen Verlust von wertvollen, im Reibbelag der Bremsbacken gebundenen Stoffelementen zu vermeiden.

Zur Reduzierung der Selbstverstärkung ist es beispielsweise aus der DE 10 2010 003 250 A1 bekannt, zwei gegenüberliegend angeordnete Bremsbacken mithilfe eines Betätigungselements entlang eines Bremsträgers radial zur Rotationsachse der Bremstrommel gegen die Mantelinnenfläche der Bremstrommel zu drücken. Eine Keil-Trommelbremse eines Fahrzeugs ist außerdem aus der DE 102 60 599 A1 bekannt. Der Bremszylinder ist mit zwei Kolben versehen, welche die Bremsbacken an den Innenumfang der Trommel drücken. Diese Kolben werden von Kugeln, die zwischen zwei geneigten Flächen eines Keils und den Kolben angeordnet sind, nach außen gedrückt.

Aufgabe der vorliegenden Erfindung ist es, eine Trommelbremse mit kompakterem Aufbau zu entwickeln.

Diese Aufgabe wird durch eine Trommelbremse mit den Merkmalen des Anspruchs 1 gelöst.

Die erfindungsgemäße Trommelbremse weist eine um eine Drehachse drehbar gelagerte Bremstrommel auf sowie mehrere in einem Aufnahmeraum der Bremstrommel gelagerte Bremsbacken mit einem jeweiligen Reibbelagträger und einem an diesem angeordneten Reibbelag.

Die Bremsbacken sind radial zu einer Drehachse der Bremstrommel an eine als Reibfläche ausgebildete Mantelinnenfläche der Bremstrommel anpressbar.

In dem Aufnahmeraum der Trommelbremse ist eine an einem Ankergehäuse drehfest angeordnete Bremszylinderanordnung zur Betätigung der Bremsbacken vorgesehen.

An einer dem Reibbelag abgewandten Seite der Reibbelagträger ist ein jeweiliger Andruckkeil angeordnet, der auf einem parallel zur Drehachse der Bremstrommel verschiebbaren Keilmechanismus aufliegt.

Der Keilmechanismus ist durch Verschieben eines Betriebsbremskolbens der Bremszylinderanordnung parallel zur Drehachse der Bremstrommel aus einer Nichtbremsstellung in eine Bremsstellung verschiebbar.

Eine solchermaßen ausgebildete Trommelbremse zeichnet sich durch ihr kompaktes Design aus.

Insbesondere lässt sich der Raum für den üblicherweise außerhalb der Bremstrommel angeordneten Bremszylinder einsparen, da diese nun innerhalb der Trommelbremse angeordnet ist, ohne das Volumen der Trommelbremse deutlich vergrößern zu müssen.

Durch die Bewegungsübertragung der Bewegung des Keilmechanismus parallel zur Drehachse der Bremstrommel in die radiale Bewegung des Bremsbackens, ergeben sich eine Vielzahl weiterer Vorteile.

So wird durch die radiale Bewegung der Bremsbacken und durch die im Vergleich zu den im Stand der Technik eingesetzten, in Umfangsrichtung betrachtet kurze Länge der Bremsbacken eine Hebelwirkung verringert, die den Bremsbacken bei sonst üblicher Schwenkbewegung der Bremsbacken beeinflusst.

Weiter wird durch das radiale Anpressen der Bremsbacken ein stabiles Reibverhalten gewährleistet sowie ein gleichmäßiger Abrieb der Reibbeläge.

Im Gegensatz zu konventionellen Trommelbremsen und auch Scheibenbremsen ist der Belagverschleiß an den einzelnen Bremsbacken identisch, da alle Bremsbacken prinzipbedingt in gleicher Weise aktuiert bzw. beaufschlagt werden.

Vorteilhafte Ausführungsvariante der Erfindung sind Gegenstand der Unteransprüche.

Gemäß einer vorteilhaften Ausführungsvariante weist die Bremszylinderanordnung ein ortsfest im Aufnahmeraum der Bremstrommel an dem Ankergehäuse befestigtes Gehäuse auf, einen relativ zum Gehäuse parallel zur Drehachse der Bremstrommel verschiebbaren Betriebsbremskolben, einen relativ zum Gehäuse parallel zur Drehachse der Bremstrommel verschiebbaren und mit der Federkraft eines Federelements beaufschlagten Feststellbremskolben sowie einen Stößel zur Übertragung einer Bewegung des Feststellbremskolbens auf den Betriebsbremskolben.

In einem Betriebsbremsdruckraum zwischen dem Gehäuse und dem Betriebsbremskolben und einen Feststellbremsdruckraum zwischen dem Gehäuse und dem Feststellbremskolben sind dabei jeweilige Druckluftzuführungen vorgesehen.

Das Federelement ermöglicht so in Verbindung mit dem Feststellbremsdruckraum eine zuverlässige Parkbremsfunktion.

Gemäß einer weiteren Ausführungsvariante ist der Stößel in einer den Betriebsbremsdruckraum von dem Feststellbremsdruckraum trennenden Trennwand des Gehäuses aufgenommen.

In einer alternativen Ausführungsvariante ist der Stößel in einer den Betriebsbremsdruckraum von dem Aufnahmeraum trennenden Trennwand des Gehäuses aufgenommen.

Beide Varianten ermöglichen eine zuverlässige Bremsbetätigung bei Ablassen der Druckluft im Feststellbremsdruckraum.

Die beiden Varianten ermöglichen je nach Einbausituation eine Festlegung des vorzugsweise als Scheibenfeder ausgebildeten Federelements an einem radial äußeren bzw. einem radial inneren Rand des Federelements.

Gemäß einer bevorzugten Weiterbildung der erfindungsgemäßen Trommelbremse ist an einer dem Reibbelag abgewandten Seite der Reibbelagträger ein jeweiliger Andruckkeil angeordnet, der auf einem parallel zur Drehachse der Bremstrommel verschiebbaren Keilring aufliegt.

Gemäß einer weiteren bevorzugten Ausführungsvariante ist der Keilring über eine Nachstelleinrichtung verstellbar.

Dazu ist in einer bevorzugten Weiterbildung auf einer dem Andruckkeil abgewandten Fläche des Keilrings ein Gewinde angeordnet, insbesondere angeformt, das mit einer Gewindehülse der Nachstelleinrichtung kämmt.

Dabei ist die Gewindehülse zusammen mit dem Keilring durch Verschieben des Betriebsbremskolbens der Bremszylinderanordnung parallel zur Drehachse der Bremstrommel verschiebbar.

Dies ermöglicht zum ersten bei Verschieben der Gewindehülse parallel zur Drehachse der Bremstrommel das Mitnehmen der Gewindehülse bei einem Bremsvorgang.

Zum zweiten wird durch Rotation der Gewindehülse eine Nachstellung des Keilrings relativ zur Gewindehülse ermöglicht, der je nach Verschleißzustand des Reibbelags der Bremsbacken den Keilring so einstellt, dass das Lüftspiel der Trommelbremse stets konstant gehalten werden kann.

Die Gewindehülse ist dabei gemäß einer bevorzugten Ausführungsvariante über einen Zahnkranz der Gewindehülse mit einem Nachstellerantrieb gekoppelt.

Gemäß einer weiteren bevorzugten Ausführungsvariante ist zwischen dem Andruckkeil und dem Keilring ein Schlitten mit mehreren Wälzkörpern angeordnet, der die Herabsetzung eines Reibwiderstands zwischen dem Andruckkeil und der Andruckfläche des Keilrings ermöglicht.

Gemäß einer alternativen Ausführungsvariante weist der Keilmechanismus eine der Anzahl der Bremsbacken entsprechende Anzahl von parallel zur Drehachse der Bremstrommelverschiebbare Keilplatten auf.

Jede der Keilplatten weist gemäß einer bevorzugten Weiterbildung eine dem Andruckkeil des jeweiligen Bremskolbens zugewandte Andruckfläche auf sowie zwei winklig zueinander ausgerichtete Gleitflächen, an denen jeweils Keilringe anliegen, die auf gegenläufig orientierten Gewinden einer Gewindehülse der Nachstelleinrichtung kämmen, wobei die Gewindehülse zusammen mit den Keilplatten und den Keilringen durch Verschieben des Betriebsbremskolbens der Bremszylinderanordnung parallel zur Drehachse der Bremstrommel axial verschiebbar ist.

Dies ermöglicht eine gleichmäßige radiale Anhebung der Keilplatten zur Nachstellung der Bremsbacken infolge eines Belagverschleißes.

Denkbar ist alternativ auch, dass die winklig zueinander ausgerichteten Gleitflächen der Gleitplatte so ausgerichtet sind, dass an einer der Gleitflächen ein Keilring anliegt, der auf einem Gewinde der Gewindehülse der Nachstelleinrichtung kämmt und die andere der Gleitflächen an einer sich radial aus der Gewindehülse vorstehende Wand anliegt.

Auch diese Variante ermöglicht eine gleichmäßige radiale Anhebung der Keilplatten zur Nachstellung der Bremsbacken.

Zur Nachstellungsbewegung der Bremsbacken weist die Gewindehülse einen mit einem Nachstellerantrieb gekoppelten Zahnkranz auf. Durch Drehen der Gewindehülse in einer Nachstellrichtung nähern sich die Keilringe einander bzw. der erste Keilring nähert sich der Wand und drückt so die die Keilplatten radial zur Drehachse der Bremstrommel in Richtung der Mantelinnenfläche der Bremstrommel.

In einer nochmals alternativen Ausführungsvariante sind die Bremsbacken direkt über die Nachstelleinrichtung radial verstellbar.

Gemäß einer ersten Variante erstreckt sich dazu sich ein drehfixierter Kolben mit einem Innengewinde von dem Reibbelagträger der Bremsbacke. In dem Kolben ist ein mit der Nachstelleinrichtung durch Drehen um eine radiale Drehachse verstellbarer Gewindestempel mit Außengewinde aufgenommen, an dem der Andruckkeil der jeweiligen Bremsbacke angeordnet ist.

In einer zweiten Variante ist der verstellbare Kolben mit Innengewinde mit der Nachstelleinrichtung durch Drehen um eine radiale Drehachse verdrehbar und ein drehfixierter Gewindestempel mit Außengewinde ist in dem Kolben aufgenommen ist.

Um den Kolben bzw. den Gewindestempel anzutreiben weist die Nachstelleinrichtung gemäß einer bevorzugten Ausführungsvariante einen Zahnkranz und einen mit einer Innenverzahnung des Zahnkranzes gekoppelten Nachstellerantrieb aufweist. Der Zahnkranz weist weiter eine Kronenradverzahnung auf, die mit einer Außenverzahnung des drehbaren Gewindestempels bzw. des drehbaren Kolbens der jeweiligen Bremsbacke kämmt.

Nachfolgend werden bevorzugten Ausführungsbeispiele anhand der beiliegenden Zeichnungen näher erläutert. Es zeigen:
- Fig. 1: eine isometrische Darstellung einer Ausführungsvariante einer erfindungsgemäßen Trommelbremse
- Fig. 2: eine isometrische Darstellung der Trommelbremse gemäß Figur 1 mit ausgeblendeter Bremstrommel zur Darstellung der Anordnung der Bremsbacken,
- Fig. 3: eine schematische Schnittdarstellung entlang der Drehachse der Trommelbremse mit einer die Trommelbremse übergreifenden Radfelge,
- Fig. 4: eine isometrische Schnittansicht der in Fig. 1 gezeigten Trommelbremse,
- Fig. 5: eine Schnittansicht einer Ausschnittvergrößerung der in Fig. 4 gezeigten Trommelbremse,
- Fig. 6: eine isometrische Schnittansicht der Darstellung der Trommelbremse gemäß Fig. 2 mit ausgeblendeter Bremstrommel,
- Fig. 7: eine isometrische Schnittansicht der Darstellung der Trommelbremse gemäß Fig. 1 in einer weiteren Schnittebene,
- Fig. 8: eine isometrische Darstellung der ringförmig angeordneten Bremsbacken, angeordnet auf dem auf der Gewindehülse aufliegenden Keilring,
- Fig. 9: eine gegenüber der Fig. 7 gedrehte isometrische Schnittansicht der in Fig. 7 gezeigten Anordnung,
- Fig. 10a - 10d: Schnittdarstellungen eines Ausschnitts der Trommelbremse analog zu Fig. 5 in unterschiedlichen Funktionsstellungen,
- Fig. 11a - 11d: den Fig. 10a - 10d entsprechende Darstellungen der Trommelbremse in einer alternativen Ausführungsvariante,
- Fig. 12: eine Schnittdarstellung entlang der Drehachse einer weiteren Ausführungsvariante der Trommelbremse,
- Fig. 13a: eine Schnittdarstellungen eines Ausschnitts der Trommelbremse gemäß Fig. 12 in der Betriebsbremsstellung,
- Fig. 13b: eine Schnittdarstellungen eines Ausschnitts der Trommelbremse gemäß Fig. 12 in einer Nichtbremsstellung bei teilweise verschlissenem Reibbelag und entsprechend nachgestellter Bremsbacke,
- Fig. 14: eine weitere Schnittdarstellungen eines Ausschnitts der Trommelbremse gemäß Fig. 12 zur Darstellung des Antriebs der Nachstelleinrichtung,
- Fig. 15a: eine isometrische Darstellung eines Teilstücks der Gewindehülse der Nachstelleinrichtung der Trommelbremse gemäß Fig. 12 mit darauf aufgesetzten Verstellringen und von diesen getragener Keilplatte in einer Stellung für einen unverschlissenen Reibbelag,
- Fig. 15b: eine isometrische Darstellung eines Teilstücks der Gewindehülse der Nachstelleinrichtung der Trommelbremse gemäß Fig. 12 mit darauf aufgesetzten Verstellringen und von diesen getragener Keilplatte in einer Stellung für einen verschlissenen Reibbelag,
- Fig. 16 und 17: schematische Darstellungen weiterer Varianten von Verstellringen und Keilplatten,
- Fig. 18: eine Schnittdarstellung entlang der Drehachse einer weiteren Ausführungsvariante der Trommelbremse,
- Fig. 19: eine isometrische Darstellung der auf einem Keilring ringförmig angeordneten Gewindehülsen zur Nachstellung der Kolben der Bremsbacken,
- Fig. 20: eine isometrische Darstellung des ringförmigen Zahnkranzes für den Antrieb der Gewindehülsen, und
- Fig. 21 - 22: den Fig. 18 - 19 entsprechende Darstellungen einer nochmals alternativen Ausführungsvariante einer Trommelbremse.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trommelbremse, Bremstrommel, Bremsbacke, Bremszylinder, Keilring, Gewindehülse und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

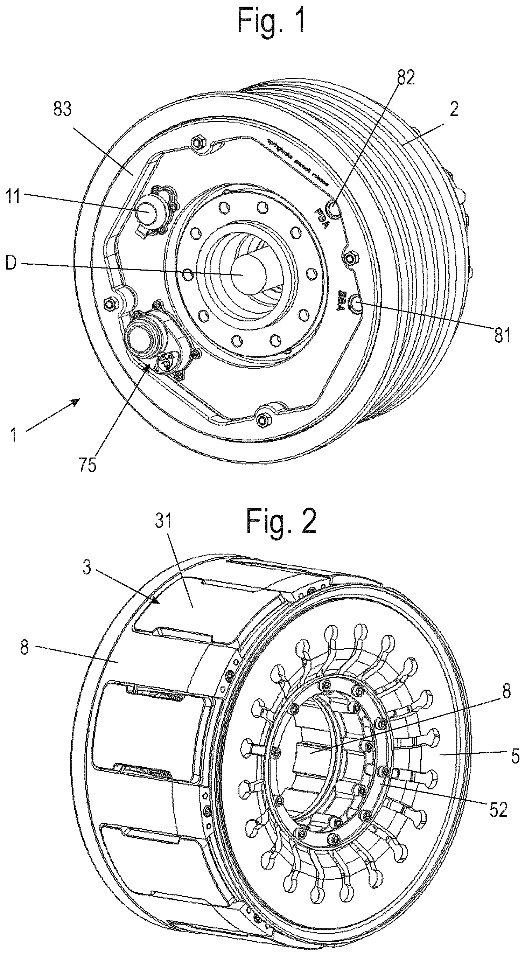

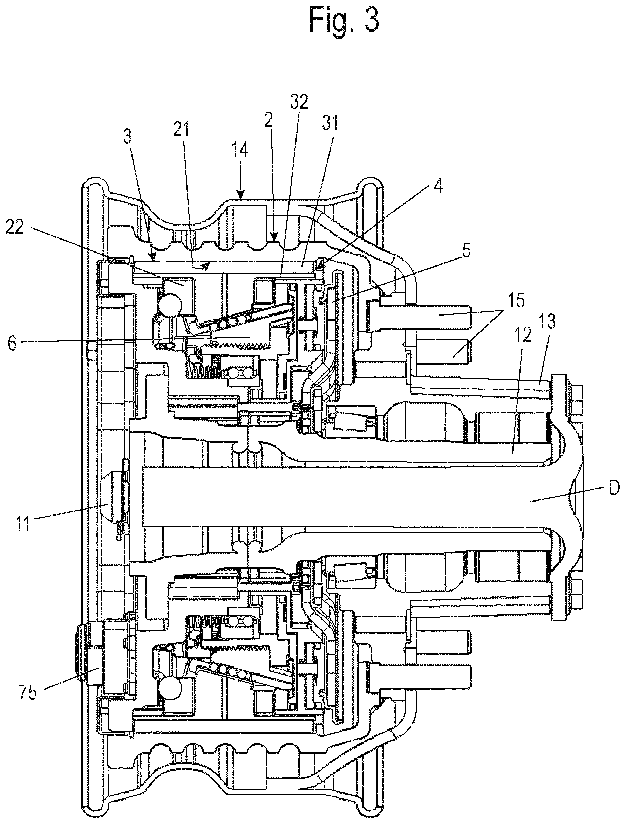

In Figur 1 ist mit dem Bezugszeichen 1 insgesamt eine Ausführungsvariante einer erfindungsgemäßen Trommelbremse bezeichnet. Die Trommelbremse 1 weist eine um eine Drehachse D drehbar gelagerte Bremstrommel 2 auf, die, wie es in Figur 3 dargestellt ist, drehfest mit einer Nabe 13 und einer die Bremstrommel 2 radial umschließende Felge 14 verbunden ist.

In einem Raum radial innerhalb der Bremstrommel 2 sind mehrere in einem Aufnahmeraum 22 der Bremstrommel 2 gelagerte Bremsbacken 3 mit einem jeweiligen Reibbelagträger 32 und einem an diesem angeordneten Reibbelag 31 angeordnet.

Die Bremsbacken 3 sind zur Ausübung eines Bremsvorgangs radial zu der Drehachse D der Bremstrommel 2 an eine als Reibfläche ausgebildete Mantelinnenfläche 21 der Bremstrommel 2 anpressbar.

Zur Durchführung dieser radialen Anpressbewegung der Bremsbacken 3 an die Mantelinnenfläche 21 der Bremstrommel 2 dient eine in dem Aufnahmeraum 22 der Bremstrommel 2 an einem Ankergehäuse 8 drehfest angeordnete Bremszylinderanordnung 4.

Wie in den Figuren 3 bis 6 im Detail dargestellt, weist die Bremszylinderanordnung 4 bevorzugt ein ortsfest in dem Aufnahmeraum 22 der Bremstrommel 2 an dem Ankergehäuse 8 befestigtes Gehäuse 41 auf.

Relativ zu diesem Gehäuse 41 ist ein Betriebsbremskolben 42 parallel zur Drehachse D der Bremstrommel 2 verschiebbar angeordnet.

Weiter weist die Bremszylinderanordnung 4 einen Feststellbremskolben 43 auf, der relativ zum Gehäuse 41 parallel zur Drehachse D der Bremstrommel 2 verschiebbar und mit der Federkraft eines Federelements 5 beaufschlagbar ist.

Das Federelement 5 ist dabei bevorzugt als in dem Gehäuse 41 fixierte Scheibenfeder ausgebildet, wie es beispielhaft auch in Figur 2 gezeigt ist.

Die Bremszylinderanordnung 4 weist des Weiteren mehrere Stößel 44 auf, die der Übertragung einer Bewegung des Feststellbremskolbens 43 auf den Betriebsbremskolben 42 dienen.

Des Weiteren sind Druckluftzuführungen vorgesehen, die zum einen in einen Betriebsbremsdruckraum 45 zwischen dem Gehäuse 41 und dem Betriebsbremskolben 42 und zum zweiten in einen Feststellbremsdruckraum 46 zwischen dem Gehäuse 41 und dem Feststellbremskolben 43 münden.

In Figur 1 ist ein erster Druckfluideinlass 81 und ein zweiter Druckfluideinlass 82 für die Zufuhr/Abfuhr der Druckluft in den Betriebsbremsdruckraum 45 bzw. den Feststellbremsdruckraum 46 dargestellt.

Wichtig für die Betätigung der Bremsbacken 3 ist dabei stets die Bewegung des Betriebsbremskolbens 42, die im Falle einer beabsichtigten Drosselung der Geschwindigkeit des Nutzfahrzeugs, einem sogenannten Betriebsbremsvorgang, durch Druckluftzuführung in den Betriebsbremsdruckraum 45 bewirkt wird.

Im Falle einer beabsichtigten Feststellung der Bremse, die der Verhinderung eines unbeabsichtigten Wegrollens des Nutzfahrzeugs in einer Parksituation dient, wird in dem Feststellbremsdruckraum 46 im Fahrbetrieb vorhandene Druckluft aus dem Feststellbremsdruckraum 46 ausgelassen, was eine Verschiebung des Feststellbremskolbens 43 in Richtung des Betriebsbremskolbens 42 zur Folge hat. Die Verschiebung wird durch die Kraftausübung des Federelements 5 auf eine dem Betriebsbremskolben 42 abgewandte Rückseite des Feststellbremskolbens 43 verursacht.

Zur Übertragung der Bewegung des Betriebsbremskolbens 42 auf die Bremsbacken 3 ist an einer dem Reibbelag 31 abgewandten Seite der Reibbelagträger 32 ein jeweiliger Andruckkeil 33 als Teil einer jeweiligen Bremsbacke 3 angeordnet.

Dieser Andruckkeil 33 liegt dabei auf einem parallel zur Drehachse D der Bremstrommel 2 verschiebbaren Keilring 6 auf.

Der Keilring 6 ist dabei durch Verschieben des Betriebsbremskolbens 42 der Bremszylinderanordnung 4 parallel zur Drehachse D der Bremstrommel 2 aus einer Nichtbremsstellung in eine Bremsstellung verschiebbar.

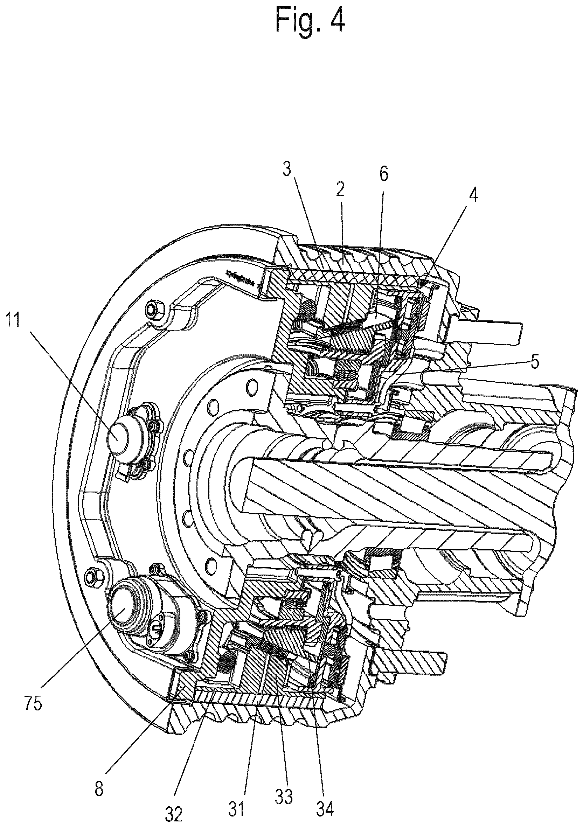

Wie in den Figuren 4 bis 6 weiter zu erkennen ist, ist der Keilring 6 über eine Nachstelleinrichtung 7 verstellbar.

Bei der hier gezeigten bevorzugten Ausführungsvariante ist auf einer dem Andruckkeil 33 abgewandten Fläche des Keilrings 6 ein Gewinde 62 angeordnet, insbesondere angeformt, das mit einer Gewindehülse 71 der Nachstelleinrichtung 7 kämmt.

Die Gewindehülse 71 ist dabei zusammen mit dem Keilring 6 durch Verschieben des Betriebsbremskolbens 42 der Bremszylinderanordnung 4 parallel zur Drehachse D der Bremstrommel 2 verschiebbar.

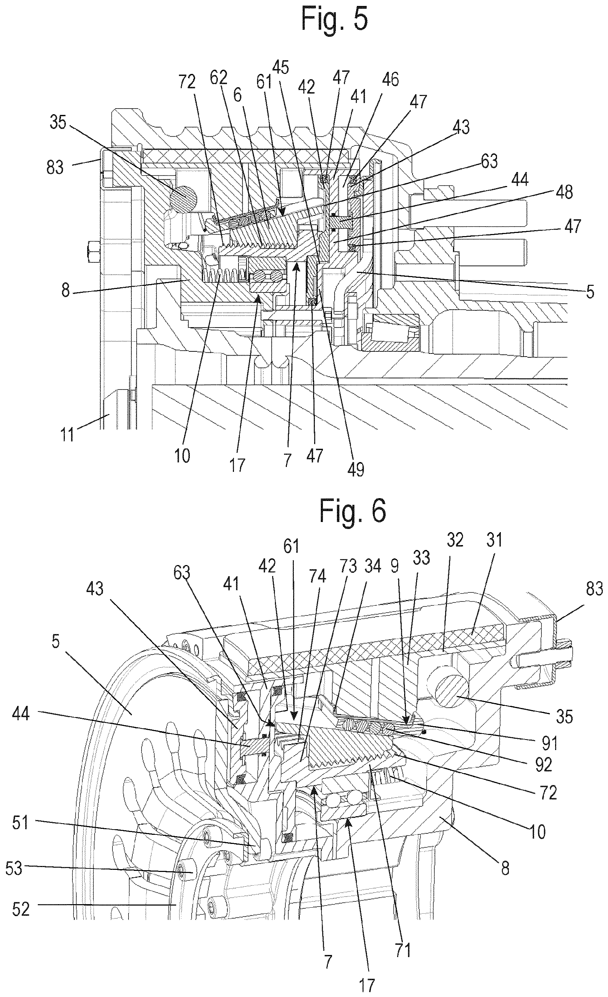

Zur Kopplung des Betriebsbremskolbens 42 mit der Gewindehülse 42 liegt eine Stirnfläche der Gewindehülse 71 am Betriebsbremskolben 42 an. Der Keilring 6 wird dabei durch ein Federelement 10, gezeigt in den Figuren 5 und 6, stets in Richtung des Betriebsbremskolbens 42 gedrückt.

Die Bewegung der Bremsbacken 3 zurück aus der Bremsstellung in die Nichtbremsstellung ist dabei, wie oben erwähnt, durch das Federelement 10 gewährleistet, das sich, wie beispielsweise in den Figuren 5 und 6 zu erkennen ist, an einem Anlageabschnitt des Ankergehäuses 8 abstützt und gegen einen Absatz der Gewindehülse 71 drückt.

Zur Aufrechterhaltung eines möglichst konstanten Lüftspiels zwischen den Reibbelägen 31 der Bremsbacken 3 und der Mantelinnenfläche 21 der Bremstrommel 2 dient bevorzugt ein Nachstellerantrieb 75.

Der Nachstellerantrieb 75 ist dabei vorzugsweise mit einem Zahnkranz 73 der Gewindehülse 71 gekoppelt. Der Zahnkranz 73 erstreckt sich bei der hier gezeigten Ausführungsvariante radial in einem Bereich zwischen der Stirnfläche 63 des Keilrings 6 und dem keilförmigen Grundkörper 64 des Keilrings 6, an dessen einer Seite das Gewinde 62 angeformt ist, das mit dem Gewinde 72 der Gewindehülse 71 kämmt und dessen andere schräg ausgerichtete Andruckfläche 61 dem Andruckkeil 33 der Bremsbacken 3 zugewandt ist.

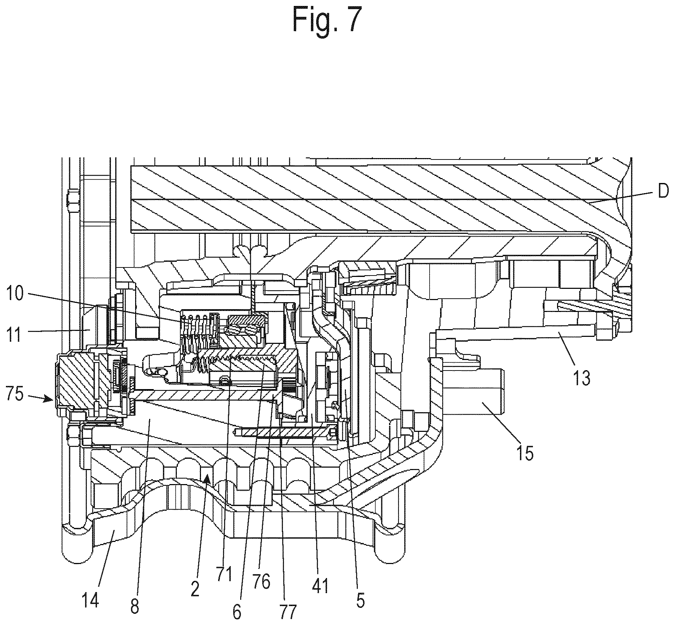

Die hier radial außen angeformte Verzahnung 74 des Zahnkranzes 73 kämmt mit einem in Figur 7 dargestellten, an eine Nachstellerwelle 76 angeordneten Getrieberad 77 des Nachstellerantriebs 75.

Zur Verminderung der Reibung zwischen den Bremsbacken 3 und dem Keilring 6 ist bei der hier dargestellten Ausführungsvariante zwischen der Andruckfläche 61 des Keilrings 6 und dem Andruckkeil 33 der jeweiligen Bremsbacken 3 ein Schlitten mit mehreren Wälzkörpern 92 angeordnet.

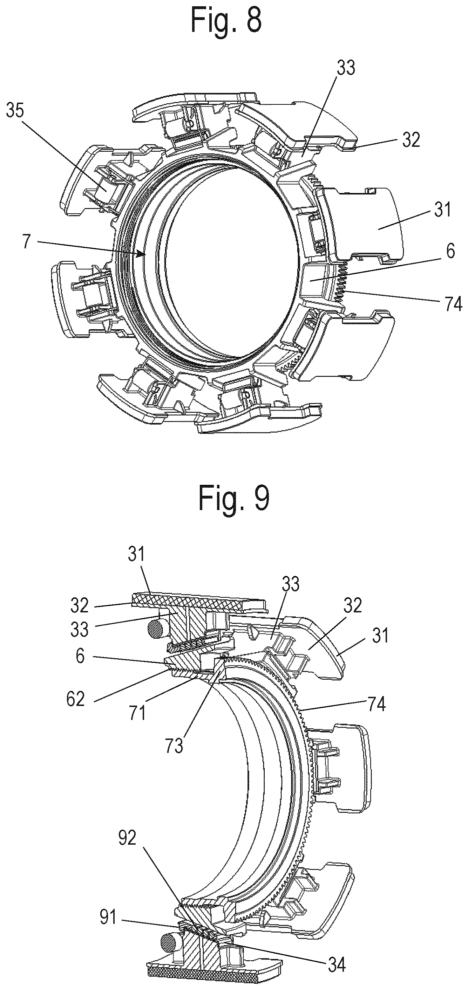

Die Figuren 8 und 9 zeigen als Einzeldarstellung die Anordnung der Bremsbacken 3 auf dem Keilring 6 und die Anordnung des Keilrings 6 auf der Gewindehülse 71 der Nachstelleinrichtung 7.

Das bevorzugt als Scheibenfeder ausgebildete Federelement 5 kann je nach Ausgestaltung des Bremszylinders 4 radial innen oder radial außen am Gehäuse 41 des Bremszylinders 4 fixiert sein.

So ist das Federelement 5 bei der in den Figuren 2 bis 6 und 10a bis 10d gezeigten Ausführungsvariante mit einem radial inneren Endbereich 51 radial innen (relativ zur Drehachse D der Bremstrommel 2), vorzugsweise über Schraubbolzen 53 und einen Klemmring 52 fixiert.

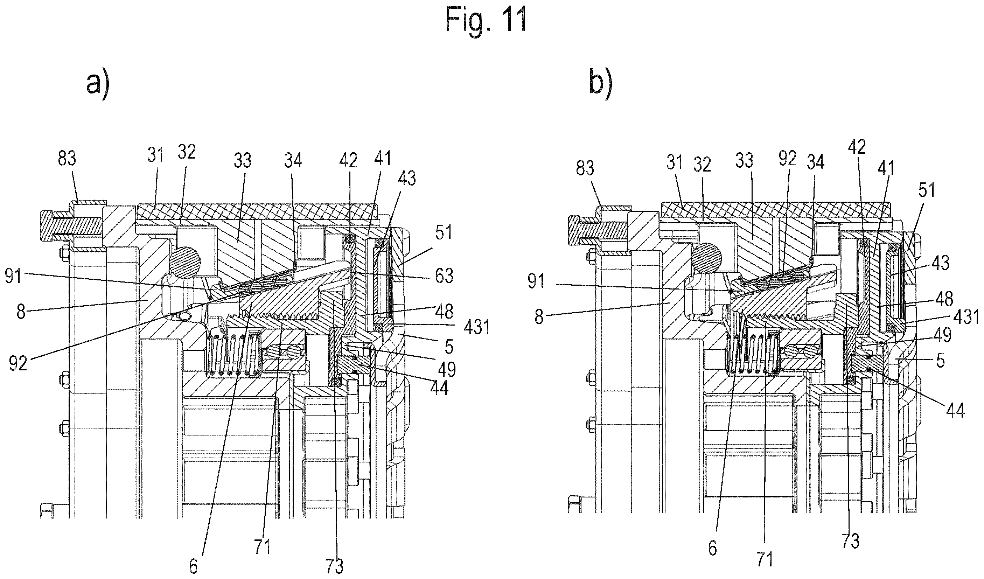

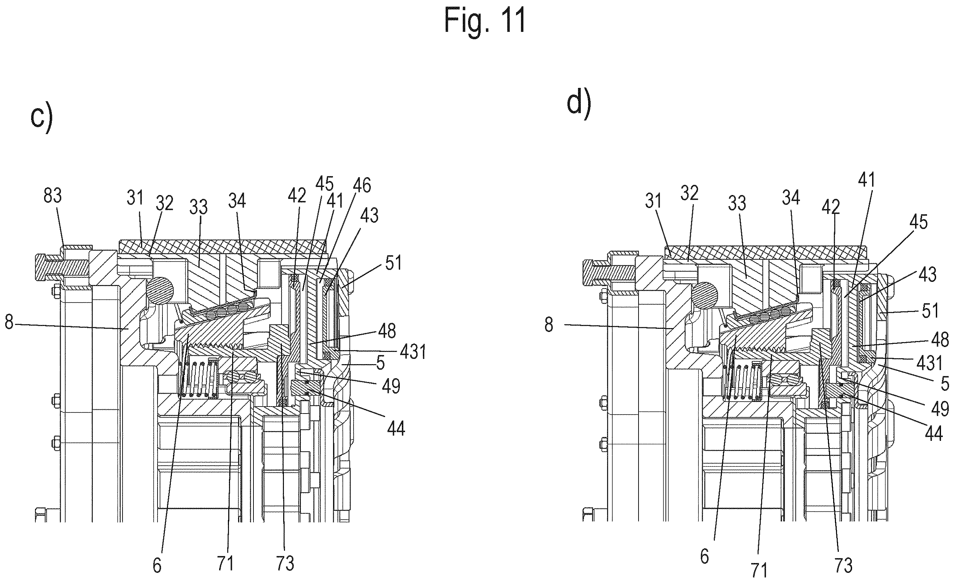

Bei der in den Figuren 11a bis 11d gezeigten Ausführungsvariante ist das als Scheibenfeder ausgebildete Federelement 5 mit einem radial äußeren Endbereich 51 radial außen am Gehäuse 41 des Bremszylinders 4 fixiert.

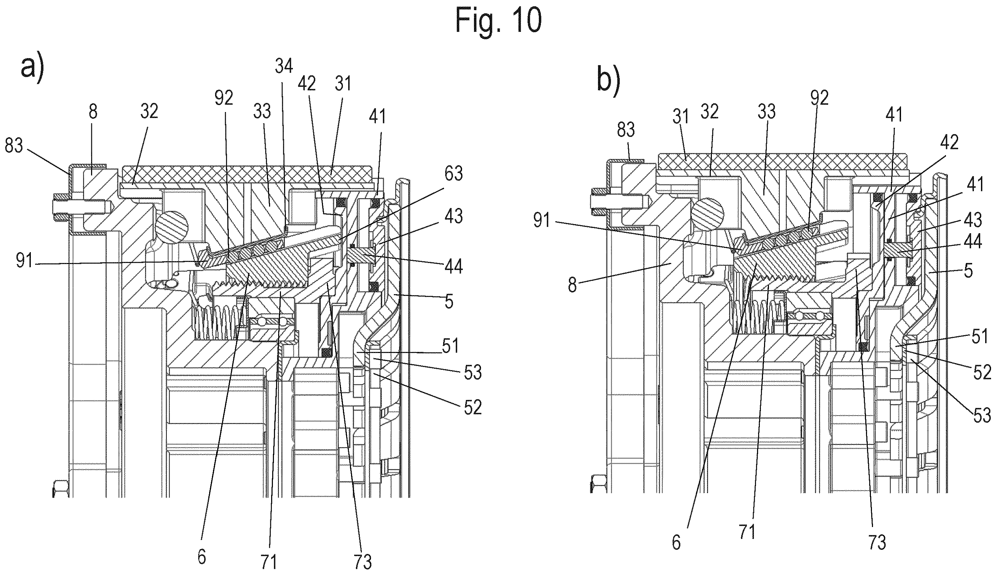

Die Figuren 10a bis 10d zeigen die Funktionsweise der Trommelbremse 1 mit radial innen befestigtem Federelement 5.

So zeigt Figur 10a eine Funktionsstellung der Trommelbremse 1, bei der sich die Bremsbacken 3 in einer Nichtbremsstellung befinden und bei der die Reibbeläge 31 unverschlissen bzw. nahezu unverschlissen sind.

In dieser Nichtbremsstellung ist der Feststellbremsdruckraum 46 der Bremszylinderanordnung 4 mit Druckluft befüllt. Der Betriebsbremsdruckraum 45 dagegen ist leer, so dass der Betriebsbremskolben 42 an einer ersten Trennwand 48 zwischen Betriebsbremsdruckraum 45 und Feststellbremsdruckraum 46 anliegt. Durch die in dem Feststellbremsdruckraum 46 vorhandene Druckluft wird das Federelement 5 vorgespannt.

Bei der in Figur 10b gezeigten Darstellung sind die Bauteile der Bremszylinderanordnung 4 identisch zu der der Figur 10a angeordnet. Der Reibbelag 31 der Bremsbacken 3 ist hier teilverschlissen.

Dementsprechend ist der Keilring 6 relativ zur in Figur 9a gezeigten Darstellung relativ zur Gewindehülse 71 der Nachstelleinrichtung 7 axial ein Stück weit weg von dem Federelement 5 verschoben, was eine geringfügige Verschiebung der Bremsbacken 3 radial nach außen bewirkt und so das Lüftspiel zwischen Reibbelag 31 und Mantelinnenfläche 21 der Bremstrommel 2 unabhängig vom Belagverschleiß auf das vorgegebene Sollmaß einstellt.

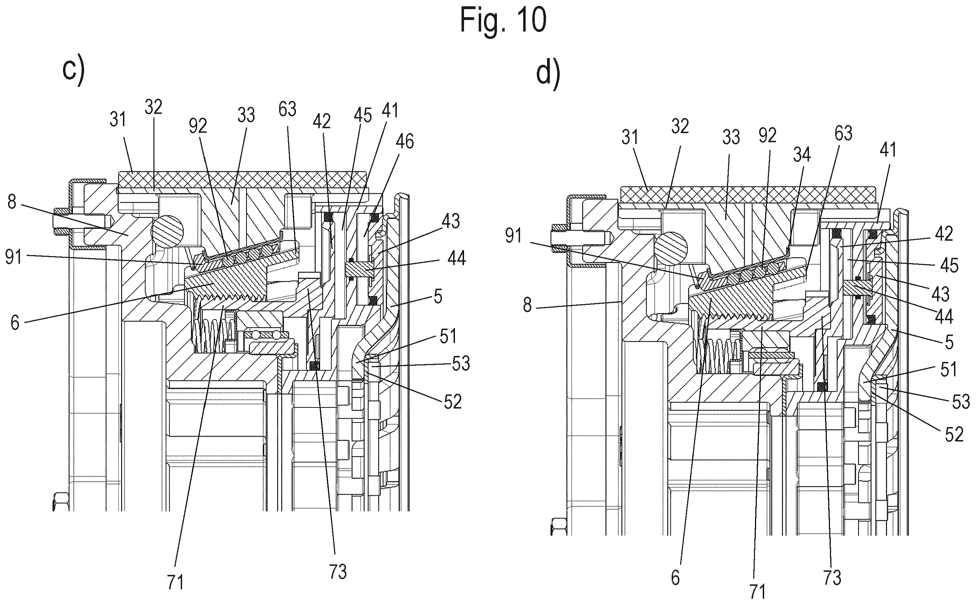

Die Figur 10c zeigt die Betriebsbremsstellung der Trommelbremse 1. Relativ zur in Figur 10a gezeigten Stellung wurde zur Auslösung der Betriebsbremsung Druckluft in den Betriebsbremsdruckraum 45 eingelassen. Dadurch wurde der Betriebsbremskolben 42 in Richtung des Keilrings 6 bewegt. Dadurch wird der Keilring 6 verschoben und drückt damit die Bremsbacken 3 radial nach außen gegen die Mantelinnenflächen 21 der Bremstrommel 2.

Die Figur 10d schließlich zeigt den Zustand einer Feststellbremsung. Bei einer solchen sogenannten Parkbremsung wird anstelle der Zuleitung von Druckluft in den Betriebsbremsdruckraum 45 die im Feststellbremsdruckraum 46 vorhandene Druckluft aus dem Feststellbremsdruckraum 46 abgelassen. Dies bewirkt, dass das Federelement 5 nun den Feststellbremskolben 43 in Richtung des Betriebsbremskolbens 42 drückt.

Zur Stabilisierung der Radialbewegung der Bremsbacken 3 ist an einer Seitenfläche des sich radial erstreckenden Andruckkeils 33 eine Stützrolle 35 vorgesehen, wie es beispielsweise in Figur 8 dargestellt ist. Die Stützrolle 35 dient dabei der Aufnahme der in axialer Richtung auf den Keilmechanismus wirkenden Kraft des Betriebsbremskolbens 42 auf.

Der an der dem Betriebsbremskolben 42 zugewandten Innenseite des Feststellbremskolbens 43 angeordnete Stößel 44, der bei dieser Ausführungsvariante in einer den Betriebsbremsdruckraum 45 von dem Feststellbremsdruckraum 46 trennenden ersten Trennwand 48 des Gehäuses 41 aufgenommen ist, drückt dadurch den Betriebsbremskolben 42 axial in Richtung des Keilrings 6 und damit den Keilring 6 so weit weg von der ersten Trennwand 48 des Gehäuses 41, dass die Bremsbacken 3 radial nach außen in die Feststellbremsstellung gedrückt werden.

Bei der in den Figuren 11a bis 11d gezeigten Ausführungsvariante ist der Stößel 44 in einer den Betriebsbremsdruckraum 45 von dem Aufnahmeraum 22 trennenden zweiten Trennwand 49 des Gehäuses 41 aufgenommen. Weiter ist bei dieser Ausführungsvariante das Federelement 5 radial außen am Gehäuse 41 der Bremszylinderanordnung 4 fixiert.

Die Ausgangsstellung der Bremszylinderanordnung 4, wie sie in Figur 11a gezeigt ist, entspricht dabei der anhand Figur 10a beschriebenen Stellung. Gleiches gilt für die Teilverschleißstellung von Figur 11b, zu deren Beschreibung entsprechend auf Figur 10b verwiesen wird.

Auch die Betriebsbremsung erfolgt analog zu der anhand von Figur 10c beschriebenen Weise.

Die Feststellbremsstellung der Figur 11d unterscheidet sich dadurch von der Feststellbremsstellung der Figur 10d, dass nunmehr der Stößel 44 im gezeigten Ausführungsbeispiel radial weiter innen angeordnet ist.

Der Feststellbremskolben 43 weist hier radial innen einen axial in Richtung des Federelements 5 vorstehenden Ring 431 auf, der durch das Ablassen der Druckluft aus dem Feststellbremsdruckraum 46 dem radial inneren Teil des Federelements 5 ermöglicht, den in diesem Bereich angeordneten Stößel 44 gegen den Betriebsbremskolben 42 zu drücken und damit die Bremsbacken 3 durch Verschieben des Keilrings 6 an die Bremstrommel 2 anzupressen.

Des Weiteren ist in Figur 1 noch zu erkennen, dass an einer Wandung eines Ankergehäuses 8 ein Staubauslass 11 angeordnet ist, durch den ermöglicht ist, bei Bremsvorgängen entstandenen Bremsstaub aus einem Innenraum der Trommelbremse 1 abzusaugen.

Durch die hier gezeigte geschlossene Bauweise der Trommelbremse 1 wird zuverlässig verhindert, dass Bremsstaub während eines Bremsvorgangs in die Umwelt abgegeben wird.

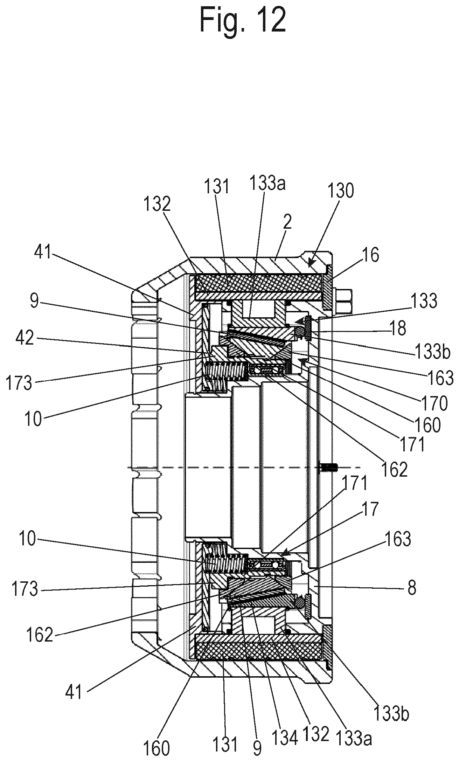

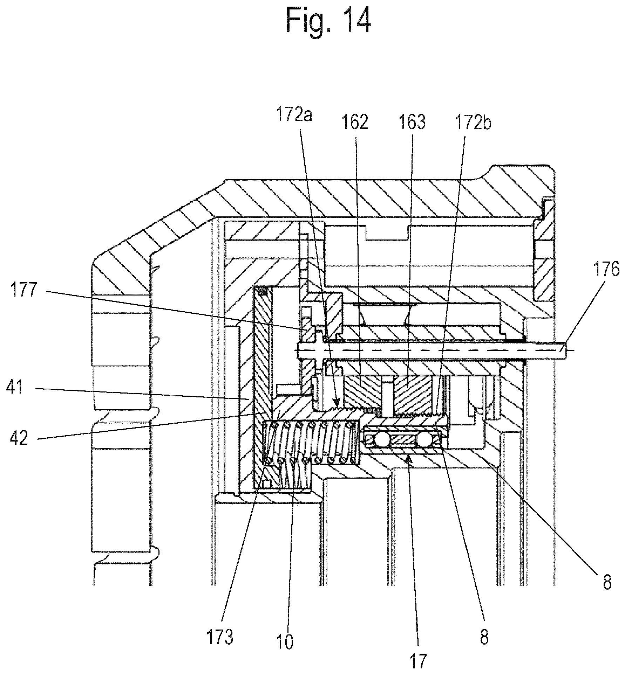

In den Figuren 12 bis 15b ist eine weitere Ausführungsvariante einer erfindungsgemäßen Trommelbremse dargestellt.

Bei dieser Ausführungsvariante ist im Gegensatz zu der anhand der Figuren 1 bis 12 beschriebenen Ausführungsvariante der Trommelbremse 1 mit einem als Keilring ausgebildeten Keilmechanismus für jede der Bremsbacken 130 eine Keilplatte 160 vorgesehen.

Zur Nachstellung der jeweiligen Bremsbacke 130 ist die Keilplatte 160 nicht selbst mit einem Gewinde an ihrer Unterseite versehen, das auf einer Gewindehülse kämmt und so durch Verfahren in axialer Richtung das Spaltmaß zwischen Reibbelag und Mantelinnenfläche 21 der Bremstrommel 2 aufgrund von Reibbelagverschleiß ausgleicht, sondern weist eine dem Andruckkeil 133 des jeweiligen Bremskolbens 130 zugewandte Andruckfläche 161 sowie zwei winklig zueinander ausgerichtete Gleitflächen auf der dem Andruckkeil 133 abgewandten Seite auf, an denen jeweils als Keilring ausgebildete Verstelllringe 162, 163 anliegen.

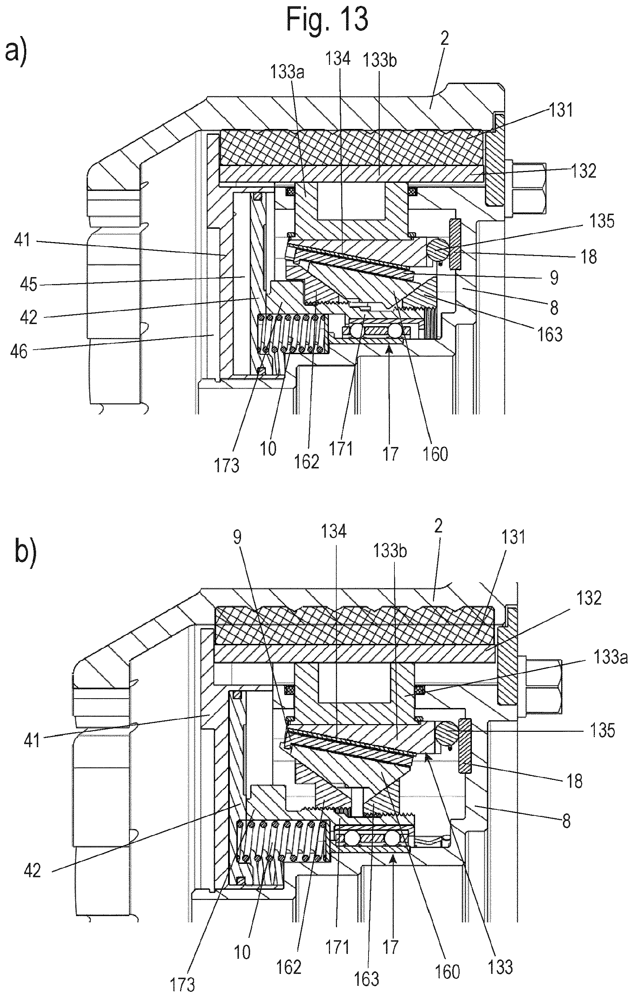

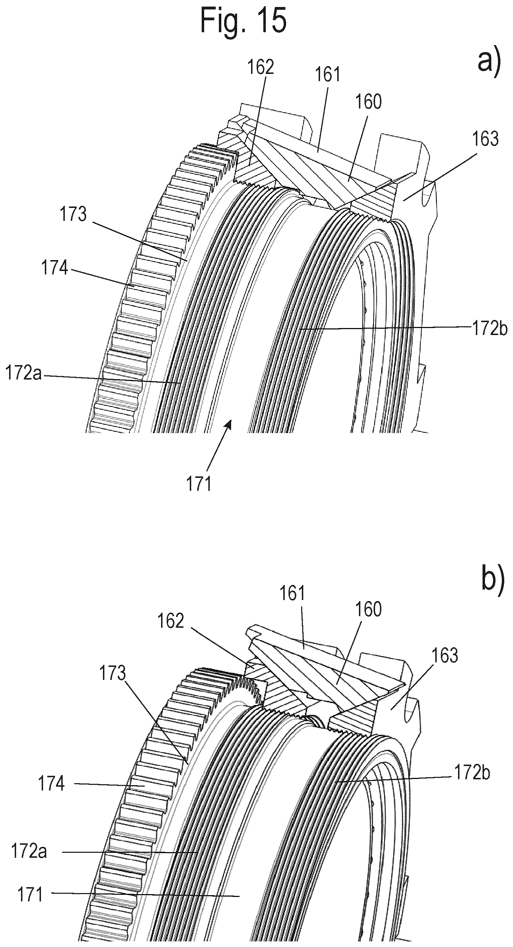

Diese Verstellringe 162, 163 kämmen auf gegenläufig orientierten Gewinden 172a, 172b einer Gewindehülse 171 der Nachstelleinrichtung 170. Durch Annähern der Verstellringe 162, 163 werden, wie gut in den Figuren 13a und 13b bzw. den Figuren 15a und 15b zu erkennen ist, die Keilplatten radial nach oben gedrückt und gleichen so das Spaltmaß zwischen Reibbelag und Mantelinnenfläche 21 der Bremstrommel 2 aufgrund von Reibbelagverschleiß aus.

Auch bei dieser Ausführungsvariante ist die Gewindehülse 171 zusammen mit den Keilplatten 160 und den Verstellringen 162, 163 durch Verschieben des Betriebsbremskolbens 42 der Bremszylinderanordnung 4 parallel zur Drehachse D der Bremstrommel 2 axial verschiebbar, um eine Betriebsbremsung durchzuführen.

Die Rückstellung der Keilplatten 160 nach erfolgter Betriebsbremsung erfolgt analog zu der in den Figuren 1-12 gezeigten Ausführungsvariante bevorzugt unter Zuhilfenahme der Rückstellfeder 10, die sich einerseits am Ankergehäuse 8 und andererseits an dem Betriebsbremskolben 42 der Bremszylinderanordnung 4 abstützt.

Zur Erleichterung der Verschiebebewegung der Gewindehülse 171 ist diese relativ zum Ankergehäuse 8 über ein Wälzlager 17 gelagert, wie es beispielsweise in den Figuren 13a und 13b sowie auch in Figur 5 und Figur 6 gezeigt ist.

Der Keilwinkel zwischen dem Andruckkeil 133 und der Andruckfläche 161 der jeweiligen Keilplatte 160 bzw. dem zwischen Keilplatte 160 und Andruckkeil 133 zwischengelagerten Schlitten 9 beträgt bevorzugt zwischen 9° und 15°, besonders bevorzugt etwa 11°.

Der Keilwinkel zwischen den der Andruckfläche 161 abgewandten Gleitflächen der Keilplatte 160 und den an diesen anliegenden Gleitflächen der Verstellringe 162, 163 beträgt bevorzugt zwischen 30° und 40°, besonders bevorzugt etwa 36°.

Je nach zu überbrückender Höhe, sprich der radialen Höhe des Reibbelags 31 der jeweiligen Bremsbacke 3 können diese Winkel variieren.

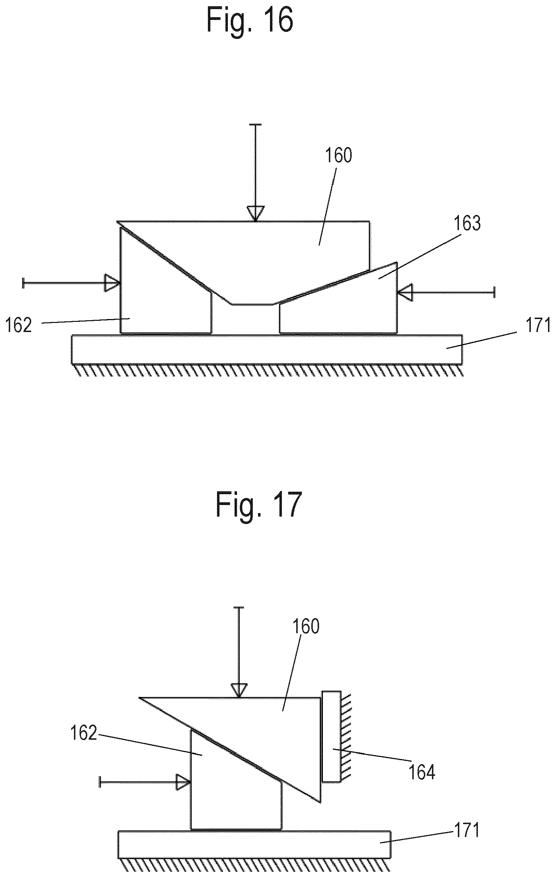

Während die Winkeleinstellung der Gleitflächen der Verstelllringe 162, 163 bei der in den Figuren 15a und 15b gezeigten Ausführungsvariante betragsmäßig etwa gleich sind, ist es, wie in den Figuren 16 und 17 beispielhaft dargestellt ist, auch denkbar, die Anstellwinkel unterschiedlich auszuführen, wie es beispielhaft in Figur 16 dargestellt ist.

Denkbar ist auch, wie beispielhaft in Figur 17 dargestellt ist, eine Variante mit im Querschnitt im Wesentlichen dreieckig gestalteten Keilplatten 160, die von radial unten mit einer Gleitfläche auf nur einen keilringförmigen Verstellring 162 abgestützt sind, der zur Nachstellung in Richtung einer bevorzugt an der Gewindehülse 171 radial vorstehende Wand 164 verfahren wird, so dass die Keilplatten 160 an der Wand 164 in axialer Richtung fixiert in radialer Richtung ver-' stellbar sind.

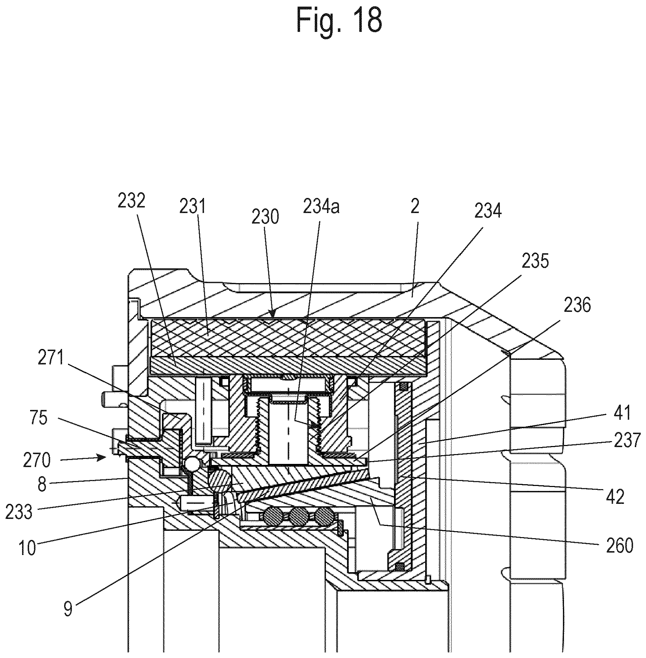

In den Figuren 18 - 22 sind zwei nochmals weitere Ausführungsvarianten einer Trommelbremse 1 dargestellt. Bei diesen Ausführungsvarianten erfolgt die Verschleißnachstellung der Bremsbacken 230 nicht durch radiales Anheben des Keilrings 260 oder in den Figuren 12-17 dargestellten Keilplatten, sondern über ein radiales Nachstellen der Bremsbacken 230 selbst.

Im Gegensatz zu den in den Figuren 1 - 17 gezeigten Ausführungsvarianten ist hier der Andruckkeil 233 nicht ortsfest über ein Andruckstück 133a am Reibbelagträger 132 angeordnet, sondern die Verbindung zwischen dem Reibbelagträger 232 und dem Andruckkeil 233 erfolgt hier über einen Kolben/Gewindestempel-Mechanismus.

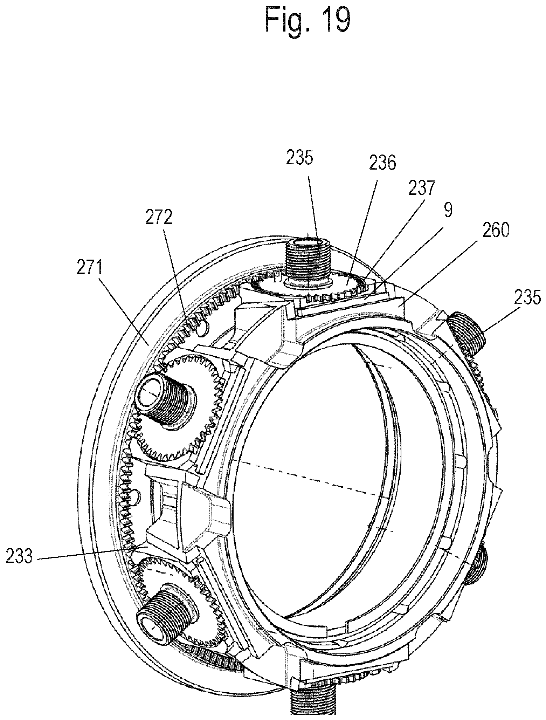

Bei der in Figuren 18 und 19 gezeigten Ausführungsvariante erstreckt sich von der dem Reibbelag 231 abgewandten Seite des Reibbelagträgers 232 der Bremsbacke 230 ein relativ zum Reibbelagträger 232 drehfixierter Kolben 234 mit einem Innengewinde 234a, in dem ein mit der Nachstelleinrichtung 270 durch Drehen um eine radiale Drehachse verstellbarer Gewindestempel 235 mit einem flächigen Fuß und in das Innengewinde 234a des Kolben 234 einschraubbarem Außengewinde aufgenommen ist, an dem der Andruckkeil 233 der jeweiligen Bremsbacke 230 angeordnet ist.

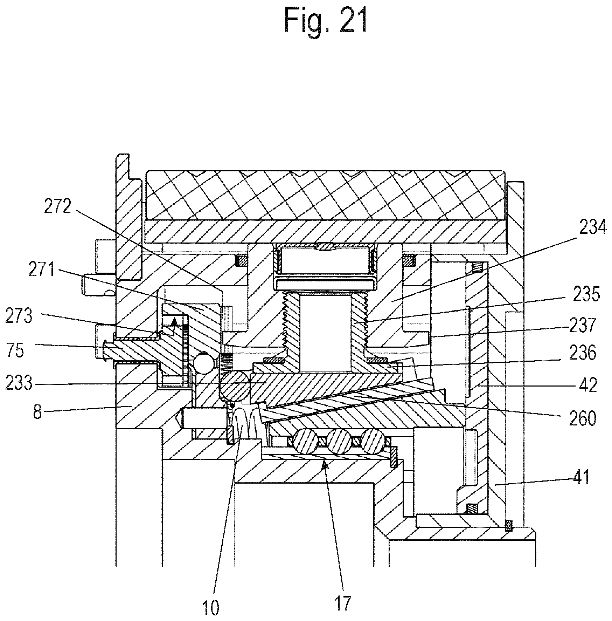

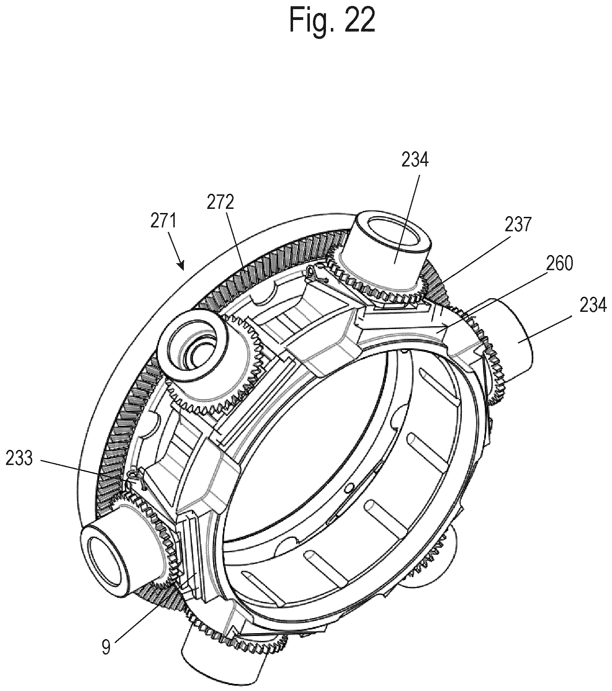

Eine kinematisch umgekehrte Anordnung ist in den Figuren 21 und 22 dargestellt. Hier erstreckt sich von dem Reibbelagträger 232 der Bremsbacke 230 ein mit der Nachstelleinrichtung 270 durch Drehen um eine radiale Drehachse verstellbarer Kolben 234, ebenfalls mit einem Innengewinde 234a, in dem ein drehfixierter (drehfixiert relativ zum Keilring 260) Gewindestempel 235 mit Außengewinde aufgenommen ist, an dessen nicht als Zahnrad ausgebildetem Fuß der Andruckkeil 233 der jeweiligen Bremsbacke 230 angeordnet ist.

Um eine Nachstellung der Bremsbacken 230 vorzunehmen, ist bei dieser Ausführungsvariante ein Nachstellantrieb 75 über einen Zahnkranz 271 mit einer Außenverzahnung 237 des drehbaren Gewindestempels 235 gemäß der in den Figuren 18 und 19 gezeigten Ausführungsvariante oder des drehbaren Kolbens 234 gemäß der in den Figuren 21 und 22 gezeigten Ausführungsvariante der jeweiligen Bremsbacke 230 gekoppelt.

So ist bei der in den Figuren 18 und 19 gezeigten Ausführungsvariante der Fuß des Gewindestempels 235 als Zahnrad 236 mit Außenverzahnung 237 ausgebildet.

Bei der der in den Figuren 21 und 22 gezeigten Ausführungsvariante ist an der Mantelaußenfläche des Kolbens ein ringförmiger Steg mit Außenverzahnung 237 angeformt.

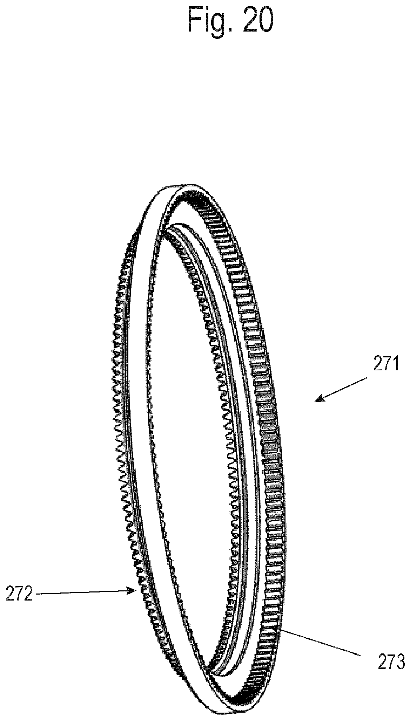

Der in einer Einzeldarstellung in Figur 20 gezeigte Zahnkranz 271 weist zum einen eine Innenverzahnung 273 auf, die, wie in den Figuren 18 und 21 gezeigt, mit einem Zahnrad des Nachstellerantriebs 75 kämmt.

Der Zahnkranz 271 weist des Weiteren eine Kronenradverzahnung 272 auf, die mit der Außenverzahnung 237 des Gewindestempels 235 bzw. des drehbaren Kolbens 234 kämmt.

### Bezugszeichenliste

- 1: Trommelbremse

- 2: Bremstrommel
- 21: Mantelinnenfläche
- 22: Aufnahmeraum

- 3: Bremsbacke
- 31: Reibbelag
- 32: Reibbelagträger
- 33: Andruckkeil
- 34: Gleitelement
- 35: Stützrolle

- 4: Bremszylinderanordnung
- 41: Gehäuse
- 42: Betriebsbremskolben
- 43: Feststellbremskolben
- 44: Stößel
- 45: Betriebsbremsdruckraum
- 46: Feststellbremsdruckraum
- 47: Dichtring
- 48: erste Trennwand
- 49: zweite Trennwand

- 5: Federelement
- 51: erstes Ende
- 52: Klemmring

- 6: Keilring
- 61: Andruckfläche
- 62: Gewinde
- 63: Stirnfläche

- 7: Nachstelleinrichtung
- 71: Gewindehülse
- 72: Gewinde
- 73: Zahnkranz
- 74: Verzahnung
- 75: Nachstellerantrieb
- 76: Nachstellerwelle
- 77: Getrieberad

- 8: Ankergehäuse
- 81: erster Druckfluideinlass
- 82: zweiter Druckfluideinlass

- 9: Schlitten
- 91: Wälzkörperaufnahme
- 92: Wälzkörper

- 10: Rückstellfeder
- 11: Staubauslass
- 12: Achse
- 13: Nabe
- 14: Felge
- 15: Schraubbolzen
- 16: Konterring
- 17: Wälzlager

- 130: Bremsbacke
- 131: Reibbelag
- 132: Reibbelagträger
- 133: Andruckkeil
- 133a: Andruckstück
- 133b: Keilstück
- 134: Gleitelement
- 135: Stützrolle

- 160: Keilplatte
- 161: Andruckfläche
- 162: erster Verstellring
- 163: zweiter Verstellring
- 164: Wand

- 170: Nachstelleinrichtung
- 171: Gewindehülse
- 172a: erstes Gewinde
- 172b: zweites Gewinde
- 173: Zahnkranz
- 174: Verzahnung

- 230: Bremsbacke
- 231: Reibbelag
- 232: Reibbelagträger
- 233: Andruckkeil
- 234: Kolben
- 235: Gewindestempel
- 236: Zahnrad
- 237: Verzahnung

- 260: Keilring

- 270: Nachstelleinrichtung
- 271: Zahnkranz
- 272: Kronenradverzahnung
- 273: Innenverzahnung

- D: Drehachse
- x: Richtung
- y: Richtung
- z: Richtung

## Patentansprüche

1. Trommelbremse (1), insbesondere für ein Nutzfahrzeug, aufweisend
- eine um eine Drehachse (D) drehbar gelagerte Bremstrommel (2),
- mehrere in einem Aufnahmeraum (22) der Bremstrommel (2) gelagerte Bremsbacken (3, 130, 230) mit einem jeweiligen Reibbelagträger (32, 132, 232) und einem an diesem angeordneten Reibbelag (31, 131, 231),
- wobei die Bremsbacken (3, 130, 230) radial zu einer Drehachse (Aₒ) der Bremstrommel (2) an eine als Reibfläche ausgebildete Mantelinnenfläche (21) der Bremstrommel (2) anpressbar sind,
- eine in dem Aufnahmeraum (22) der Bremstrommel (2) an einem Ankergehäuse (8) drehfest angeordnete Bremszylinderanordnung (4) zur Betätigung der Bremsbacken (3, 130, 230),
**dadurch gekennzeichnet, dass**
- an einer dem Reibbelag (31, 131, 231) abgewandten Seite der Reibbelagträger (32, 132, 232) ein jeweiliger Andruckkeil (33, 133, 233) angeordnet ist, der auf einem parallel zur Drehachse (D) der Bremstrommel (2) verschiebbaren Keilmechanismus aufliegt,
- wobei der Keilmechanismus durch Verschieben eines Betriebsbremskolbens (42) der Bremszylinderanordnung (4) parallel zur Drehachse (D) der Bremstrommel (2) aus einer Nichtbremsstellung in eine Bremsstellung verschiebbar ist.

2. Trommelbremse (1) nach Anspruch 1, **dadurch gekennzeichnet, dass** die Bremszylinderanordnung (4) ein ortsfest im Aufnahmeraum (22) der Bremstrommel (2) an dem Ankergehäuse (8) befestigtes Gehäuse (41), den relativ zum Gehäuse (41) parallel zur Drehachse (D) der Bremstrommel (2) verschiebbaren Betriebsbremskolben (42), einen relativ zum Gehäuse (41) parallel zur Drehachse (D) der Bremstrommel (2) verschiebbaren und mit der Federkraft eines Federelements (5) beaufschlagten Feststellbremskolben (43) und mehrere Stößel (44) zur Übertragung einer Bewegung des Feststellbremskolbens (43) auf den Betriebsbremskolben (42) aufweist, wobei jeweilige Druckluftzuführungen in einen Betriebsbremsdruckraum (45) zwischen dem Gehäuse (41) und dem Betriebsbremskolben (42) und einen Feststellbremsdruckraum (46) zwischen dem Gehäuse (41) und dem Feststellbremskolben (43) vorgesehen sind.

3. Trommelbremse (1) nach Anspruch 2, **dadurch gekennzeichnet, dass** die Stößel (44) in einer den Betriebsbremsdruckraum (45) von dem Feststellbremsdruckraum (46) trennenden ersten Trennwand (48) des Gehäuses (41) aufgenommen sind.

4. Trommelbremse (1) nach Anspruch 2, **dadurch gekennzeichnet, dass** die Stößel (44) in einer den Betriebsbremsdruckraum (45) von dem Aufnahmeraum (22) trennenden zweiten Trennwand (49) des Gehäuses (41) aufgenommen sind.

5. Trommelbremse (1) nach einem der Ansprüche 2 bis 4, **dadurch gekennzeichnet, dass** das Federelement (5) als an dem Gehäuse (41) fixierte Scheibenfeder ausgebildet ist.

6. Trommelbremse (1) nach einem der vorstehenden Ansprüche, **dadurch gekennzeichnet, dass** zwischen dem Andruckkeil (33, 133) und dem Keilmechanismus ein Schlitten (9) mit mehreren Wälzkörpern (92) angeordnet ist.

7. Trommelbremse (1) nach einem der vorstehenden Ansprüche, **dadurch gekennzeichnet, dass** die Bremsbacken (3, 130, 230) über eine Nachstelleinrichtung (7, 170, 270) radial verstellbar sind.

8. Trommelbremse (1) nach Anspruch 7, **dadurch gekennzeichnet, dass** der Keilmechanismus über die Nachstelleinrichtung (7, 170, 270) verstellbar ist.

9. Trommelbremse (1) nach einem der vorstehenden Ansprüche, **dadurch gekennzeichnet, dass** der Keilmechanismus einem parallel zur Drehachse (D) der Bremstrommel (2) verschiebbaren Keilring (6, 260) aufweist, auf dem der Andruckkeil (33, 133, 233) aufliegt.

10. Trommelbremse (1) nach Anspruch 9, **dadurch gekennzeichnet, dass** auf einer dem Andruckkeil (33) abgewandten Fläche des Keilrings (6) ein Gewinde (62) angeordnet, insbesondere angeformt ist, das mit einer Gewindehülse (71) der Nachstelleinrichtung (7, 170, 270) kämmt, wobei die Gewindehülse (71) zusammen mit dem Keilring (6) durch Verschieben des Betriebsbremskolbens (42) der Bremszylinderanordnung (4) parallel zur Drehachse (D) der Bremstrommel (2) verschiebbar ist.

11. Trommelbremse (1) nach einem der Ansprüche 1 bis 8, **dadurch gekennzeichnet, dass** der Keilmechanismus eine der Anzahl der Bremsbacken (3) entsprechende Anzahl von parallel zur Drehachse (D) der Bremstrommel (2) verschiebbare Keilplatten (160) aufweist.

12. Trommelbremse (1) nach Anspruch 11, **dadurch gekennzeichnet, dass** jede der Keilplatten (160) eine dem Andruckkeil (133) des jeweiligen Bremskolbens (3) zugewandte Andruckfläche (161) aufweist und zwei winklig zueinander ausgerichtete Gleitflächen, an denen jeweils Verstellringe (162, 163) anliegen, die auf gegenläufig orientierten Gewinden (172a, 172b) einer Gewindehülse (171) der Nachstelleinrichtung (170) kämmen, wobei die Gewindehülse (171) zusammen mit den Keilplatten (160) und den Verstellringen (162, 163) durch Verschieben des Betriebsbremskolbens (42) der Bremszylinderanordnung (4) parallel zur Drehachse (D) der Bremstrommel (2) axial verschiebbar ist.

13. Trommelbremse (1) nach Anspruch 11, **dadurch gekennzeichnet, dass** jede der Keilplatten (160) eine dem Andruckkeil (133) des jeweiligen Bremskolbens (3) zugewandte Andruckfläche (161) aufweist und zwei winklig zueinander ausgerichtete Gleitflächen, wobei an einer der Gleitflächen ein Verstellring (162) anliegt, der auf einem Gewinde (172a) der Gewindehülse (171) der Nachstelleinrichtung (170) kämmt und an die andere der Gleitflächen an einer sich radial aus der Gewindehülse (171) vorstehenden Wand (164) anliegt, wobei die Gewindehülse (171) zusammen mit den Keilplatten (160) und dem Verstellring (162) durch Verschieben des Betriebsbremskolbens (42) der Bremszylinderanordnung (4) parallel zur Drehachse (D) der Bremstrommel (2) axial verschiebbar ist.

14. Trommelbremse (1) nach Anspruch 12 oder 13, **dadurch gekennzeichnet, dass** die Gewindehülse (171) einen mit einem Nachstellerantrieb (75) gekoppelten Zahnkranz (173) aufweist, wobei durch Drehen der Gewindehülse die Keilplatten (160) durch Annähern der Verstelllringe (162, 163) zueinander bzw. Annähern des ersten Verstellrings (162) an die Wand (164) radial zur Drehachse (D) der Bremstrommel (2) in Richtung der Mantelinnenfläche (21) der Bremstrommel (2) nachstellbar sind.

15. Trommelbremse (1) nach Anspruch 7, **dadurch gekennzeichnet, dass** die Bremsbacken (230) direkt über die Nachstelleinrichtung (270) radial verstellbar sind.

16. Trommelbremse (1) nach Anspruch 15, **dadurch gekennzeichnet, dass** sich von den Reibbelagträgern (232) der Bremsbacken (230) ein drehfixierter Kolben (234) mit einem Innengewinde (234a) erstreckt, in dem ein mit der Nachstelleinrichtung (270) durch Drehen um eine radiale Drehachse verstellbarer Gewindestempel (235) mit Außengewinde aufgenommen ist, an dem der Andruckkeil (233) der jeweiligen Bremsbacke (230) angeordnet ist.

17. Trommelbremse (1) nach Anspruch 15, **dadurch gekennzeichnet, dass** sich von den Reibbelagträgern (232) der Bremsbacken (230) ein mit der Nachstelleinrichtung (270) durch Drehen um eine radiale Drehachse verstellbarer Kolben (234) mit einem Innengewinde (234a) erstreckt, in dem ein drehfixierter Gewindestempel (235) mit Außengewinde aufgenommen ist, an dem der Andruckkeil (233) der jeweiligen Bremsbacke (230) angeordnet ist.

18. Trommelbremse (1) nach Anspruch 16 oder 17, **dadurch gekennzeichnet, dass** die Nachstelleinrichtung (270) einen Zahnkranz (271) und einen mit einer Innenverzahnung (273) des Zahnkranzes (271) gekoppelten Nachstellerantrieb (75) aufweist, wobei der Zahnkranz (271) weiter eine Kronenradverzahnung (272) aufweist, die mit einer Außenverzahnung (237) des drehbaren Gewindestempels (235) oder des drehbaren Kolbens (234) der jeweiligen Bremsbacke (230) kämmt.

## Claims

1. Drum brake (1), in particular for a utility vehicle, having
- a brake drum (2) which is rotatably mounted about an axis of rotation (D),
- a plurality of brake shoes (3, 130, 230) which are mounted in a receiving space (22) of the brake drum (2), each having a respective friction lining carrier (32, 132, 232) and a friction lining (31, 131, 231) arranged thereon,
- wherein the brake shoes (3, 130, 230) are pressable radially with respect to an axis of rotation (AD) of the brake drum (2) onto a shell inner surface (21) of the brake drum (2) configured as a friction surface,
- a brake cylinder arrangement (4), which is arranged fixedly for conjoint rotation on an armature housing (8) in the receiving space (22) of the brake drum (2), for actuating the brake shoes (3, 130, 230),
**characterized in that**
- a respective pressure wedge (33, 133, 233) is arranged on a side of the friction lining carriers (32, 132, 232) facing away from the friction lining (31, 131, 231), said pressure wedge lying on a wedge mechanism which is displaceable parallel to the axis of rotation (D) of the brake drum (2),
- wherein the wedge mechanism is displaceable from a non-braking position into a braking position by way of displacement of a service brake piston (42) of the brake cylinder arrangement (4) parallel to the axis of rotation (D) of the brake drum (2).

2. Drum brake (1) according to claim 1, **characterized in that** the brake cylinder arrangement (4) has a housing (41) which is fastened in a stationary manner in the receiving space (22) of the brake drum (2) to the armature housing (8), the service brake piston (42) which is displaceable relative to the housing (41) parallel to the axis of rotation (D) of the brake drum (2), a parking brake piston (43) which is displaceable relative to the housing (41) parallel to the axis of rotation (D) of the brake drum (2) and is acted upon by the spring force of a spring element (5), and a plurality of plungers (44) for transmitting a movement of the parking brake piston (43) to the service brake piston (42), wherein respective compressed air feeds into a service brake pressure space (45) between the housing (41) and the service brake piston (42) and into a parking brake pressure space (46) between the housing (41) and the parking brake piston (43) are provided.

3. Drum brake (1) according to claim 2, **characterized in that** the plungers (44) are received in a first dividing wall (48) of the housing (41), which first dividing wall separates the service brake pressure space (45) from the parking brake pressure space (46).

4. Drum brake (1) according to claim 2, **characterized in that** the plungers (44) are received in a second dividing wall (49) of the housing (41), which second dividing wall separates the service brake pressure space (45) from the receiving space (22).

5. Drum brake (1) according to any one of claims 2 to 4, **characterized in that** the spring element (5) is configured as a disk spring fixed to the housing (41).

6. Drum brake (1) according to any one of the preceding claims, **characterized in that** a slide (9) with a plurality of rolling bodies (92) is arranged between the pressure wedge (33, 133) and the wedge mechanism.

7. Drum brake (1) according to any one of the preceding claims, **characterized in that** the brake shoes (3, 130, 230) are adjustable radially via an adjusting device (7, 170, 270).

8. Drum brake (1) according to claim 7, **characterized in that** the wedge mechanism is adjustable via the adjusting device (7, 170, 270).

9. Drum brake (1) according to any one of the preceding claims, **characterized in that** the wedge mechanism has a tapered ring (6, 260) which is displaceable parallel to the axis of rotation (D) of the brake drum (2) and on which the pressure wedge (33, 133, 233) lies.

10. Drum brake (1) according to claim 9, **characterized in that** a thread (62) is arranged, in particular formed, on a surface of the tapered ring (6) facing away from the pressure wedge (33), which thread meshes with a threaded sleeve (71) of the adjusting device (7, 170, 270), wherein the threaded sleeve (71) is displaceable together with the tapered ring (6) by displacement of the service brake piston (42) of the brake cylinder arrangement (4) parallel to the axis of rotation (D) of the brake drum (2).

11. Drum brake (1) according to any one of claims 1 to 8, **characterized in that** the wedge mechanism has a number of wedge plates (160) corresponding to the number of brake shoes (3), which wedge plates are displaceable parallel to the axis of rotation (D) of the brake drum (2).

12. Drum brake (1) according to claim 11, **characterized in that** each of the wedge plates (160) has a pressure surface (161) facing the pressure wedge (133) of the respective brake piston (3) and two sliding surfaces oriented at an angle to one another, against which respective adjustment rings (162, 163) bear, which mesh with oppositely oriented threads (172a, 172b) of a threaded sleeve (171) of the adjusting device (170), wherein the threaded sleeve (171), together with the wedge plates (160) and the adjustment rings (162, 163), is axially displaceable by displacement of the service brake piston (42) of the brake cylinder arrangement (4) parallel to the axis of rotation (D) of the brake drum (2).

13. Drum brake (1) according to claim 11, **characterized in that** each of the wedge plates (160) has a pressure surface (161) facing the pressure wedge (133) of the respective brake piston (3) and two sliding surfaces oriented at an angle to one another, wherein an adjustment ring (162) bears against one of the sliding surfaces, which meshes with a thread (172a) of the threaded sleeve (171) of the adjusting device (170), and the other of the sliding surfaces bears against a wall (164) projecting radially from the threaded sleeve (171), wherein the threaded sleeve (171), together with the wedge plates (160) and the adjustment ring (162), is axially displaceable by displacement of the service brake piston (42) of the brake cylinder arrangement (4) parallel to the axis of rotation (D) of the brake drum (2).

14. Drum brake (1) according to claim 12 or 13, **characterized in that** the threaded sleeve (171) has a toothed rim (173) coupled to an adjuster drive (75), wherein by rotation of the threaded sleeve the wedge plates (160) are adjustable radially with respect to the axis of rotation (D) of the brake drum (2) in the direction of the shell inner surface (21) of the brake drum (2) by the adjustment rings (162, 163) approaching one another or the first adjustment ring (162) approaching the wall (164).

15. Drum brake (1) according to claim 7, **characterized in that** the brake shoes (230) are radially adjustable directly via the adjusting device (270).

16. Drum brake (1) according to claim 15, **characterized in that** a piston (234) fixed so as not to rotate and having an internal thread (234a) extends from the friction lining carriers (232) of the brake shoes (230), in which piston a threaded plunger (235) having an external thread is received, which piston is adjustable by the adjusting device (270) by rotation about a radial axis of rotation, on which threaded plunger the pressure wedge (233) of the respective brake shoe (230) is arranged.

17. Drum brake (1) according to claim 15, **characterized in that** a piston (234) having an internal thread (234a) and adjustable by the adjusting device (270) by rotation about a radial axis of rotation extends from the friction lining carriers (232) of the brake shoes (230), in which piston a threaded plunger (235) having an external thread and fixed so as not to rotate is received, on which threaded plunger the pressure wedge (233) of the respective brake shoe (230) is arranged.

18. Drum brake (1) according to claim 16 or 17, **characterized in that** the adjusting device (270) has a toothed rim (271) and an adjuster drive (75) coupled to an internal toothing system (273) of the toothed rim (271), wherein the toothed rim (271) further has a crown gear toothing system (272) which meshes with an external toothing system (237) of the rotatable threaded plunger (235) or of the rotatable piston (234) of the respective brake shoe (230).

## Revendications

1. Frein à tambour (1), en particulier pour un véhicule utilitaire, présentant
- un tambour de frein (2) monté de manière rotative autour d'un axe de rotation (D),
- plusieurs mâchoires de frein (3, 130, 230) montées dans une chambre de logement (22) du tambour de frein (2) avec un support de garniture de friction respectif (32, 132, 232) et une garniture de friction (31, 131, 231) disposée sur celui-ci,
- dans lequel les mâchoires de frein (3, 130, 230) peuvent être pressées radialement par rapport à un axe de rotation (AD) du tambour de frein (2) contre une surface intérieure d'enveloppe (21) du tambour de frein (2) conçue en tant que surface de friction,
- un agencement de cylindre de frein (4) disposé de manière immobile en rotation dans la chambre de logement (22) du tambour de frein (2) sur un boîtier d'induit (8) pour actionner les mâchoires de frein (3, 130, 230),
**caractérisé en ce que**
- une cale de pression respective (33, 133, 233) est disposée sur un côté opposé à la garniture de friction (31, 131, 231) du support de garniture de friction (32, 132, 232), cale qui repose sur un mécanisme de cale déplaçable parallèlement à l'axe de rotation (D) du tambour de frein (2),
- dans lequel le mécanisme de cale peut être déplacé d'une position de non-freinage à une position de freinage par le déplacement d'un piston de frein de service (42) de l'agencement de cylindre de frein (4) parallèlement à l'axe de rotation (D) du tambour de frein (2).

2. Frein à tambour (1) selon la revendication 1, **caractérisé en ce que** l'agencement de cylindre de frein (4) présente un boîtier (41) fixé de manière stationnaire au boîtier d'induit (8) dans la chambre de logement (22) du tambour de frein (2), le piston de frein de service (42) déplaçable par rapport au boîtier (41) parallèlement à l'axe de rotation (D) du tambour de frein (2), un piston de frein de stationnement (43) déplaçable par rapport au boîtier (41) parallèlement à l'axe de rotation (D) du tambour de frein (2) et sollicité par la force de ressort d'un élément à ressort (5) et plusieurs poussoirs (44) pour transmettre un mouvement du piston de frein de stationnement (43) au piston de frein de service (42), dans lequel des arrivées d'air comprimé respectives sont prévues dans une chambre de pression de frein de service (45) entre le boîtier (41) et le piston de frein de service (42) et une chambre de pression de frein de stationnement (46) entre le boîtier (41) et le piston de frein de stationnement (43).

3. Frein à tambour (1) selon la revendication 2, **caractérisé en ce que** les poussoirs (44) sont logés dans une première paroi de séparation (48) du boîtier (41) séparant la chambre de pression de freinage de service (45) de la chambre de pression de freinage de stationnement (46).

4. Frein à tambour (1) selon la revendication 2, **caractérisé en ce que** les poussoirs (44) sont logés dans une seconde paroi de séparation (49) du boîtier (41) séparant la chambre de pression de frein de service (45) de la chambre de logement (22).

5. Frein à tambour (1) selon l'une quelconque des revendications 2 à 4, **caractérisé en ce que** l'élément à ressort (5) est conçu en tant que ressort à disque fixé au boîtier (41).

6. Frein à tambour (1) selon l'une quelconque des revendications précédentes, **caractérisé en ce qu'un** chariot (9) avec plusieurs corps de roulement (92) est disposé entre la cale de pression (33, 133) et le mécanisme de cale.

7. Frein à tambour (1) selon l'une quelconque des revendications précédentes, **caractérisé en ce que** les mâchoires de frein (3, 130, 230) sont réglables radialement par l'intermédiaire d'un appareil d'ajustage (7, 170, 270).

8. Frein à tambour (1) selon la revendication 7, **caractérisé en ce que** le mécanisme de cale est réglable au moyen de l'appareil d'ajustage (7, 170, 270).

9. Frein à tambour (1) selon l'une quelconque des revendications précédentes, **caractérisé en ce que** le mécanisme de cale présente une bague de cale (6, 260) déplaçable parallèlement à l'axe de rotation (D) du tambour de frein (2), bague sur laquelle repose la cale de pression (33, 133, 233).

10. Frein à tambour (1) selon la revendication 9, **caractérisé en ce qu'un** filetage (62) est disposé, en particulier moulé, sur une surface de la bague de cale (6) opposée à la cale de pression (33), filetage qui s'engrène avec une douille filetée (71) de l'appareil d'ajustage (7, 170, 270), dans lequel la douille filetée (71) peut être déplacée avec la bague de cale (6) parallèlement à l'axe de rotation (D) du tambour de frein (2) en déplaçant le piston de frein de service (42) de l'agencement de cylindre de frein (4).

11. Frein à tambour (1) selon l'une quelconque des revendications 1 à 8, **caractérisé en ce que** le mécanisme de cale présente un nombre de plaques de cale (160) pouvant être déplacées parallèlement à l'axe de rotation (D) du tambour de frein (2) correspondant au nombre de mâchoires de frein (3).

12. Frein à tambour (1) selon la revendication 11, **caractérisé en ce que** chacune des plaques de cale (160) présente une surface de pression (161) tournée vers la cale de pression (133) du piston de frein respectif (3) et deux surfaces de glissement orientées angulairement l'une par rapport à l'autre, surfaces contre lesquelles s'appuient respectivement des bagues de réglage (162, 163) qui s'engrènent sur des filetages (172a, 172b) orientés dans le sens opposé d'une douille filetée (171) de l'appareil d'ajustage (170), dans lequel la douille filetée (171) peut être déplacée axialement parallèlement à l'axe de rotation (D) du tambour de frein (2) avec les plaques de cale (160) et les bagues de réglage (162, 163) en déplaçant le piston de frein de service (42) de l'agencement de cylindre de frein (4).

13. Frein à tambour (1) selon la revendication 11, **caractérisé en ce que** chacune des plaques de cale (160) présente une surface de pression (161) tournée vers la cale de pression (133) du piston de frein respectif (3) et deux surfaces de glissement orientées angulairement l'une par rapport à l'autre, dans lequel une bague de réglage (162) repose sur une des surfaces de glissement, bague qui s'engrène sur un filetage (172a) de la douille filetée (171) de l'appareil d'ajustage (170) et repose sur l'autre des surfaces de glissement sur une paroi (164) faisant saillie radialement de la douille filetée (171), dans lequel la douille filetée (171) peut être déplacée axialement avec les plaques de cale (160) et la bague de réglage (162) en déplaçant le piston de frein de service (42) de l'agencement de cylindre de frein (4) parallèlement à l'axe de rotation (D) du tambour de frein (2).

14. Frein à tambour (1) selon la revendication 12 ou 13, **caractérisé en ce que** la douille filetée (171) présente une couronne dentée (173) couplée à un entraînement d'ajustage (75), dans lequel, par la rotation de la douille filetée, les plaques de cale (160) peuvent être ajustées en rapprochant les bagues de réglage (162, 163) les unes des autres ou en rapprochant la première bague de réglage (162) sur la paroi (164) radialement par rapport à l'axe de rotation (D) du tambour de frein (2) en direction de la surface intérieure (21) du tambour de frein (2).

15. Frein à tambour (1) selon la revendication 7, **caractérisé en ce que** les mâchoires de frein (230) sont réglables radialement directement par l'intermédiaire de l'appareil d'ajustage (270).

16. Frein à tambour (1) selon la revendication 15, **caractérisé en ce qu'un** piston (234) fixé en rotation s'étend à partir des supports de garniture de friction (232) des mâchoires de frein (230) avec un filetage intérieur (234a) dans lequel un poinçon fileté (235) est logé avec un filetage extérieur, réglable avec l'appareil d'ajustage (270) par rotation autour d'un axe de rotation radial, filetage extérieur sur lequel est disposée la cale de pression (233) de la mâchoire de frein respective (230).

17. Frein à tambour (1) selon la revendication 15, **caractérisé en ce qu'un** piston (234) réglable par rotation autour d'un axe de rotation radial avec l'appareil d'ajustage (270) s'étend à partir des supports de garniture de friction (232) des mâchoires de frein (230) avec un filetage intérieur (234a) dans lequel un poinçon fileté (235) fixé en rotation est logé avec un filetage extérieur sur lequel est disposée la cale de pression (233) de la mâchoire de frein respective (230).

18. Frein à tambour (1) selon la revendication 16 ou 17, **caractérisé en ce que** l'appareil d'ajustage (270) présente une couronne dentée (271) et un entraînement d'ajustage (75) couplé à une denture intérieure (273) de la couronne dentée (271), dans lequel la couronne dentée (271) présente en outre une denture de grande couronne (272) qui s'engrène avec une denture extérieure (237) du poinçon fileté rotatif (235) ou du piston rotatif (234) de la mâchoire de frein respective (230).
